# EUROPEAN PATENT APPLICATION

(11) **EP 2 851 597 A1**
(43) Date of publication of application: **25.03.2015**
(21) Application number: 13794380.9
(22) Date of filing: 06.05.2013
(51) Int. Cl.: F16L 11/08, F16L 11/02

(54) **PRESSURE-RESISTANT HOSE**

(30) Priority: 19.05.2012 KR 20120053352
(71) Applicant: Chung, In-Sun, Gyeonggi-do 472-962 (KR)
(72) Inventor: Chung, In-Sun, Gyeonggi-do 472-962 (KR)
(74) Representative: Pfenning, Meinig & Partner GbR
(86) International application number: PCT/KR2013/003901
(87) International publication number: WO 2013/176420

(57) **Abstract**

Disclosed herein is a pressure-resistant hose. The hose includes an inner lining (10), a fabric woven layer (30) and an outer sheath (20). The fabric woven layer includes first-direction threads (31) and second-direction threads (32) that are wound around the inner lining such that the second-direction threads cross the first-direction threads. Each of the first- and second-direction threads comprises joined thread formed by joining at least two strands of yarn. The yarns of the joined thread are brought into parallel contact with each other and are wound around the inner lining. Each yarn comprises a filament yarn. The first- and second-direction threads are wound around the inner lining in such a way that ten or less joined threads form a pitch so that the inner lining and the outer sheath can be coupled to each other through openings formed in the fabric woven layer.

## Description

### Technical Field

The present invention generally relates to pressure-resistance hoses for use in transferring high-pressure fluid such as gas or liquid to desired places and, more particularly, to a pressure-resistance hose in which a fabric woven layer is interposed between the inner lining and the outer sheath, wherein the fabric woven layer includes ten or less joined threads, each of which is formed of two or three strands of yarn, and the inner lining and the outer sheath are coupled to each other through openings of the fabric woven layers. By virtue of such construction, pressure resistance and flexibility of the hose can be improved at comparatively low cost, and the coupling force between the inner lining and the outer sheath can be enhanced.

### Background Art

Pressure-resistance hoses are a tube for use in transferring fluid such as water, gas or flowable earth and sand. Such a pressure-resistance hose generally includes a tubular inner lining and a tubular outer sheath that are both made of rubber or resin having high flexibility so that the hose can easily bend. A fabric woven layer is interposed between the inner lining and the outer sheath. The fabric woven layer is formed by crossing first- and second-direction threads over each other on the outer surface of the inner lining, thus enhancing the strength of the hose, and providing appropriate flexibility to the hose.

Furthermore, such a pressure-resistance hose is typically comparatively long. Therefore, when the hose is pulled by significant tensile force or is stuck to an obstacle or fluid is present in the hose, comparatively large frictional force is applied to the hose. When a predetermined pressure or more is applied in the hose, the length of the hose may be changed.

Although the hose may have a large thickness or be made of hard resin to solve the above-mentioned problems, the hose must have a predetermined level or more of flexibility appropriate to bend.

Meanwhile, the conventional pressure-resistance hose is problematic in that the distance between threads of the fabric woven layer is excessively large. If the distance between the threads is large, the adhesive force between the inner lining and the outer sheath is increased; however, the reinforcing effect of the fabric woven layer is reduced, whereby the pressure-resistance of the hose is reduced.

### Disclosure

### Technical Problem

Accordingly, the present invention has been made keeping in mind the above problems occurring in the prior art, and an object of the present invention is to provide a pressure-resistance hose that has greatly increased pressure resistance despite little increase in production cost compared to the conventional technique, thus having markedly extended lifetime.

Another object of the present invention is to provide a pressure-resistance hose that can effectively solve a hose rupture problem which occurs in the hose made of soft resin, for example, when a user or machine pulls the comparatively long hose, a high pressure is applied to the hose, or the hose is pulled and thus the inner diameter thereof is reduced and the pressure of fluid in the hose is increased.

A further object of the present invention is to provide a pressure-resistance hose configured such that adhesive force between a fabric woven layer and an inner lining and between the inner lining and the outer sheath can be enhanced, thus preventing a delamination phenomenon, thereby further enhancing the durability of the hose.

### Technical Solution

In order to accomplish the above objects, the present invention provides a pressure-resistant hose, including: a tubular inner lining; a fabric woven layer having first-direction threads spirally and continuously wound around an outer circumferential surface of the inner lining, and second-direction threads continuously wound around the outer circumferential surface of the inner lining such that the second-direction threads overlap and cross the first-direction threads; and a tubular outer sheath provided around the outer circumferential surface of the inner lining, the outer sheath covering the fabric woven layer. Each of the first- and second-direction threads includes a joined thread formed of at least two strands of yarn. The strands of yarn of the joined thread are brought into parallel contact with each other and are wound around the outer circumferential surface of the inner lining, each of the strands of yarn comprising a filament yarn. The first- and second-direction threads are wound around the outer circumferential surface of the inner lining in such a way that ten or less joined threads form a pitch so that the inner lining and the outer sheath are coupled to each other through openings formed in the fabric woven layer by crossing the first- and second-direction threads.

The fabric woven layer may be formed by weaving the first- and second-direction threads in an over and under pattern to form a mesh that is interposed between the inner lining and the outer sheath.

Each of the openings of the fabric woven layer may have an area of 0.49 mm² or more.

The outer circumferential surface of the inner lining may protrude outward through the openings of the fabric woven layer and be closely attached to an inner circumferential surface of the outer sheath.

The outer circumferential surface of the inner lining may protrude by 50% or more of a thickness of the fabric woven layer.

An inner circumferential surface of the inner lining may have an embossed shape.

An inner circumferential surface of the outer sheath may protrude inward through the openings of the fabric woven layer and be closely attached to the outer circumferential surface of the inner lining.

The inner circumferential surface of the outer sheath may protrude by 50% or more of a thickness of the fabric woven layer.

An outer circumferential surface of the outer sheath may have an embossed shape.

### Advantageous Effects

In a pressure-resistant hose according to the present invention, first- and second-direction threads of a fabric woven layer include ten or less threads each of which includes at least two strands of yarn. An inner lining and an outer sheath are attached to each other through openings of the fabric woven layer. Thereby, despite little increased production cost, the pressure resistance of the hose can be greatly enhanced, thus markedly extending the lifetime of the hose.

The hose having the enhanced pressure resistance can effectively solve a hose rupture problem occurring in the hose made of soft resin, for example, when a user or machine pulls the comparatively long hose, a high pressure is applied to the hose, or the hose is pulled and thus the inner diameter thereof is reduced and the pressure of fluid in the hose is increased.

Furthermore, adhesive force between the fabric woven layer and the inner lining and between the inner lining and the outer sheath can be enhanced. Thereby, a delamination phenomenon can be prevented, and the durability of the hose can be further enhanced.

### Description of Drawings

Fig. 1 is a perspective view illustrating a hose according to an embodiment of the present invention;
Fig. 2 is a transverse cross-sectional view of the hose according to the embodiment of the present invention;
Fig. 3 is a sectional view taken along line A-A' of Fig. 1; and
Fig. 4 is a sectional view taken along line A-A' according to another embodiment of the present invention.

### Best Mode

Hereinafter, preferred embodiments of the present invention will be described in detail with reference to the attached drawings. However, the embodiments of the present invention can be modified in a variety of forms, and the scope of the present invention is not limited to the following embodiments.

The embodiments of the present invention aim to help those with ordinary knowledge in this art more clearly understand the present invention. Accordingly, in the drawings, the shapes and sizes of elements may be exaggerated for the sake of clearer description. Reference now should be made to the drawings, in which the same reference numerals are used throughout the different drawings to designate the same or similar components.

In the specification, when the explanatory phrase 'a part includes a component' is used, this means that the part may further include the component without excluding other components, so long as special explanation is not given.

In the following description of the embodiments of the present invention, the longitudinal direction of an inner layer of the house will refer to the left and right direction for the sake of explanation.

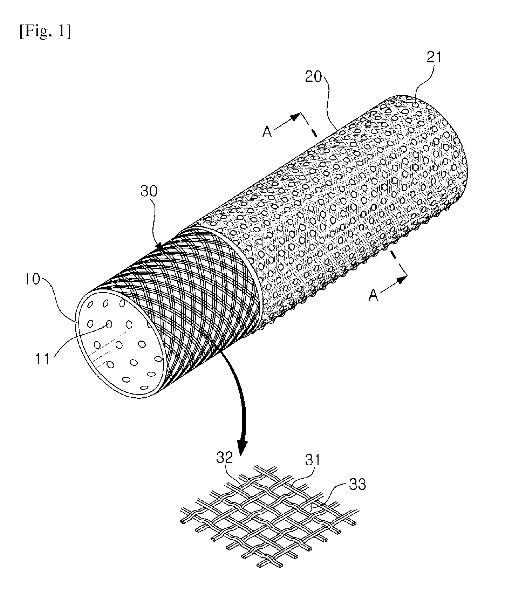

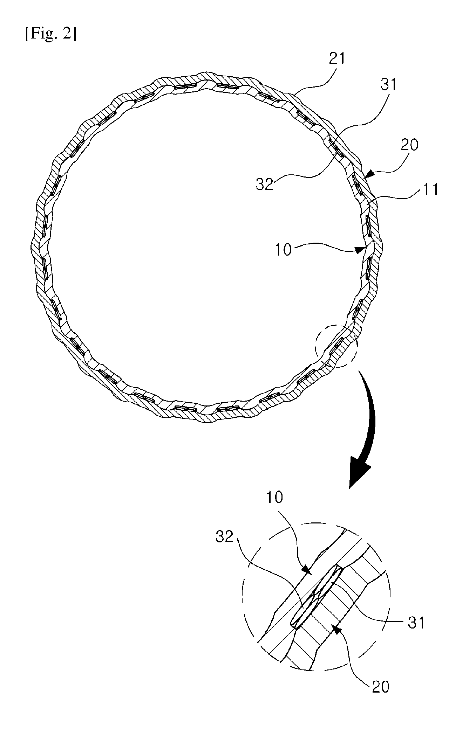

Referring to Figs. 1 through 3, a hose according to an embodiment of the present invention includes: a tubular inner lining 10; a tubular outer sheath 20 provided on an outer circumferential surface of the inner lining 10; and a mesh-patterned fabric woven layer 30 that includes first- and second-direction threads 31 and 32 and is interposed between the outer circumferential surface of the inner lining 10 and an inner circumferential surface of the outer sheath 20.

The inner lining 10 and the outer sheath 20 are made of material such as rubber or resin; however, the present invention is not limited to this.

The inner lining 10 and the outer sheath 20 are attached to each other through a plurality of openings 33 of the fabric woven layer 30 that are formed by crossing the first- and second-direction threads 31 and 32 over each other.

Preferably, each opening 33 has an area of 0.49 mm² or more so as to prevent adhesion surfaces between the inner lining 10 and the outer sheath 20 from being detached from each other by deformation of the first or second direction thread. The adhesion surfaces each having the above-mentioned area fix the first- and second-direction threads 31 and 32 of the fabric woven layer 30 in place. Therefore, even if the outer sheath 20 is damaged, rupture of the hose can be prevented.

If physical force is applied to either the inner lining 10 or the outer sheath 20, the outer circumferential surface of the inner lining 10 or the inner circumferential surface of the outer sheath 20 is brought into close contact with a contact surface of the other one through the openings 33 and thus can be adhered to each other without a separate bonding process.

In an embodiment, the following method may be used. The inner lining 10 and the outer sheath 20 are heated to a predetermined temperature, while the air pressure in the inner lining 10 is increased. Then, portions of the outer circumferential surface of the inner lining 10 protrude outward through the openings 33 and thus form a plurality of outward inner-lining protrusions 11. The outward inner-lining protrusions 11 are brought into close contact with the inner circumferential surface of the outer sheath 20 and thus can be attached thereto without a separate bonding process.

Preferably, each outward inner-lining protrusion 11 protrudes outward by at least 50% of the sum of thicknesses of the first- and second-direction threads 31 and 32 of the fabric woven layer 30. Due to the outward inner-lining protrusions 11, the inner circumferential surface of the inner lining 10 is embossed. Furthermore, the outer circumferential surface of the outer sheath 20 is also embossed having a plurality of outward outer-sheath protrusion 21 corresponding to the outward inner-lining protrusions 11.

The outward inner-lining protrusions 11 restrict movement of the first- and second-direction threads 31 and 32 of the fabric woven layer 30, thus forming a structure capable of preventing deformation of the first- and second-direction threads 31 and 32. Therefore, the inner lining 10 and the outer sheath 20 can be prevented from being detached from each other at the adhesion surfaces therebetween when the hose is used, for example, when the hose is pulled or bent. In addition, the outer sheath can be prevented from peeling while the hose is used. Thereby, the expected lifetime of the hose can be increased.

Furthermore, the embossed shape of the outer sheath 20 can further enhance the flexibility of the hose and minimize a friction area with the ground when in use, thus reducing resistance when the hose is pulled on the ground. Therefore, the expected lifetime of the hose can be extended.

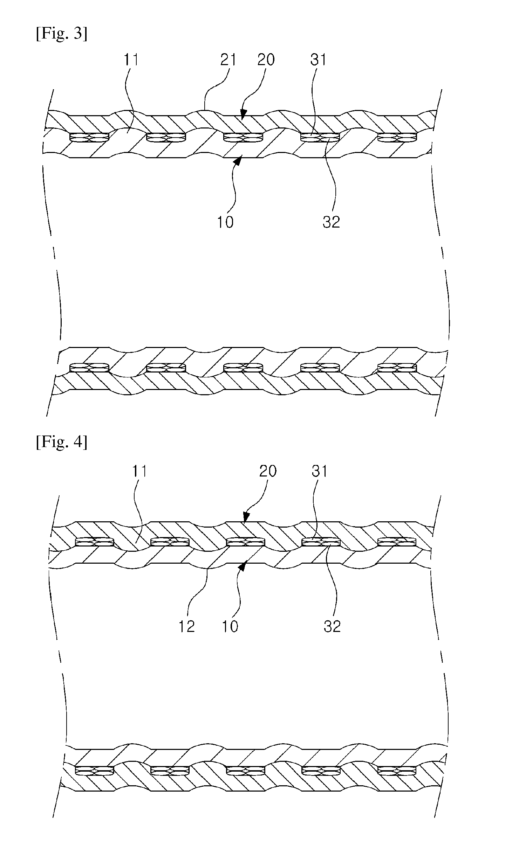

In another embodiment, referring to Fig. 4, portions of the outer circumferential surface of the outer sheath 20 protrude inward through the openings 33 and thus form a plurality of inward outer-sheath protrusions 22. The inward outer-sheath protrusions 22 are brought into close contact with the inner circumferential surface of the outer sheath 20 and thus can be attached thereto without a separate bonding process.

Preferably, each inward outer-sheath protrusion 22 protrudes inward by at least 50% of the sum of thicknesses of the first- and second-direction threads 31 and 32 of the fabric woven layer 30. Due to the inward outer-sheath protrusions 22, the outer circumferential surface of the outer sheath 20 is embossed. Furthermore, the inner circumferential surface of the inner lining 10 is also embossed having a plurality of inward inner-lining protrusions 12 corresponding to the inward outer-sheath protrusions 22.

The inward outer-sheath protrusions 22 restrict movement of the first- and second-direction threads 31 and 32 of the fabric woven layer 30, thus forming a structure capable of preventing deformation of the first- and second-direction threads 31 and 32. Therefore, the inner lining 10 and the outer sheath 20 can be prevented from being detached from each other at the adhesion surfaces therebetween when the hose is used, for example, the hose is pulled or bent. In addition, the outer sheath can be prevented from peeling while the hose is used. Thereby, the expected lifetime of the hose can be increased.

The fabric woven layer 30 is used to provide a predetermined durability to withstand internal pressure required for the hose. The fabric woven layer 30 includes: a plurality of first-direction threads 31 spirally and continuously wound around the outer circumferential surface of the inner lining 10; and a plurality of second-direction threads 32 continuously wound around the outer circumferential surface of the inner lining 10 such that the second-direction threads 32 overlap and cross the first-direction threads 31.

In another embodiment, the fabric woven layer 30 is formed by weaving the first- and second-direction threads 31 and 32 in an over and under pattern on the outer circumferential surface of the inner lining 10 and then interposing the woven layer between the inner lining 10 and the outer sheath 20. All of the first- and second-direction threads 31 and 32 may be woven in the same over and under pattern or, alternatively, they may be oven in different over and under patterns as needed.

Preferably, each of the first- and second-direction threads 31 and 32 is made of a single thread formed by joining two or more thin filament yarns together. The first- and second-direction threads 31 and 32 can be configured in a variety of combinations, for example, having the same thickness or different thicknesses as needed. The yarns of each thread are brought into parallel contact with each other and are wound around the outer circumferential surface of the inner lining 10.

Meanwhile, the conventional pressure-resistant hose is configured such that a fabric woven layer is attached to an inner lining by bonding and includes first- and second-direction threads each made of a mono-thread. Due to such structural characteristics of the fabric woven layer, the durability of the hose is comparatively low. Thus, the conventional pressure-resistant hose is mainly used for a low pressure hose. Furthermore, the improvement in flexibility of the hose or adhesive force between the inner lining and the outer sheath is limited.

On the other hand, in the pressure-resistance hose according to the present invention, each of the first- and second-direction threads 31 and 32 is a joined thread formed by joining at least two yarns. The yarns of the joined thread are brought into parallel contact with each other and are wound around the outer circumferential surface of the inner lining 10. Each yarn is a filament yarn. Each of the first-and second-direction threads 31 and 32 is wound around the inner lining 10 in such a way that ten or less joined threads form a single pitch so that the inner lining 10 and the outer sheath 20 can be coupled to each other through the openings 33 of the fabric woven layer 30 formed by crossing the first- and second-direction threads 31 and 32.

In an embodiment, the fabric woven layer 30 is configured such that: two or three first-direction threads 31, each of which is a joined thread made by joining at least two yarns, are wound parallel to each other around the inner lining 10; and two or three second-direction threads 32, each of which is a joined thread, are wound the inner lining 10 such that the second-direction threads 32 cross the first-direction threads 31 to form a mesh pattern. In this way, a structure in which the second-direction thread 32 disposed above pushes down the first-direction thread 31 is repeatedly configured. By virtue of the above-mentioned structure, even when the hose is pulled by a significant tensile force or is stuck to an obstacle and bent, the original positions of the first- and second-direction threads 31 and 32 of the fabric woven layer 30 can be prevented from being undesirably changed. Therefore, the intended function of the fabric woven layer that enhances the durability of the hose can be reliably maintained.

In other words, because two or three yarns forming each of the first- and second-direction threads 31 and 32 are brought into parallel contact with each other and are wound around the outer surface of the inner lining 10, the hose can be more flexible by virtue of slip between the yarns and the elasticity of the hose can be further increased. That is, the inner lining 10 and the first- and second-direction threads 31 and 32 form a kind of wall having high durability, thus restricting deformation of the hose.

The hose according to the embodiment of the present invention has durability corresponding to bursting strength of 270 bar or more when it is assumed that the hose has the same weight as that of the conventional pressure-resistant hose.

As such, in the hose having comparatively high pressure resistance, the lower the working pressure, the less the hose is deformed when in use. The reduced deformation of the hose extends the lifetime of the hose.

Furthermore, if the deformation of the hose is reduced, the flexibility of the hose is enhanced when in use. Thus, the hose is not easily bent, whereby the hose can be prevented from being damaged.

In the present invention, the amount of material used in manufacturing the inner lining 10 and the outer sheath 20 of the hose is almost the same as that of the conventional hose; however, the amount of thread used is increased compared to the conventional hose. Given the fact that the cost of thread is comparatively inexpensive, a difference between the production cost of the hose according to the present invention and the conventional hose is negligible; nevertheless, the pressure resistance of the hose of the present invention can be markedly enhanced. Therefore, compared to the conventional hose, the expected lifetime of the hose can be greatly extended despite little increased production cost.

Meanwhile, the pressure resistance of the hose depends on the amount of first- and second-direction threads 31 and 32 per a unit length of the hose. However, if the amount of the first- and second-direction threads 31 and 32 is excessively increased, the contact area between the inner lining 10 and the outer sheath 20 is reduced and the adhesive force between the inner lining 10 and the outer sheath 20 is reduced although the durability of the hose is enhanced.

If the adhesive force between the inner lining 10 and the outer sheath 20 is reduced, the outer sheath 20 may peel from the inner lining 10 when the hose is in use. In this case, the lifetime and flexibility of the hose are reduced.

However, in the embodiment of the present invention, the flexibility and durability of the hose can be maintained. Furthermore, each of the first- and second-direction threads 31 and 32 is formed by joining two or three yarns and functions to press the inner lining 10 while providing spaces for adhesion between the inner lining 10 and the outer sheath 20. As such, if a single joined thread is made of two or more yarns, the first- and second-direction threads 31 and 32 can be easily configured with a desired precise pitch.

The hose according to the present invention may be manufactured to have a structure such that when the outer sheath 20 according to the above-mentioned embodiments refers to a first outer sheath, a second outer sheath having a tubular shape is formed around the outer circumferential surface of the first outer sheath 20, and a second fabric woven layer is interposed between an outer circumferential surface of the first outer sheath 20 and an inner circumferential surface of the second outer sheath.

In this embodiment, the second fabric woven layer has the same structure as that of the fabric woven layer 30 of the above-described embodiment. That is, the second fabric woven layer includes a plurality of first-direction threads that are spirally wound around the outer circumferential surface of the first outer sheath 20, and a plurality of second-direction threads that are continuously wound around the outer circumferential surface of the first outer sheath 20 while overlapping and crossing the first-direction threads.

Furthermore, the first- and second-direction threads of the second fabric woven layer have the same structure as that of the first- and second-direction threads 31 and 32 of the fabric woven layer 30. Each of the first- and second-direction threads comprises ten or less joined threads in a single pitch. That is, total twenty or less joined threads are provided in a single pitch.

If each of the first- and second-direction threads has ten or more threads in a pitch, the openings 33 of the fabric woven layer 30 that are formed in the surface of the inner lining 10 are excessively dense and are markedly reduced in width. In this case, the height to which the outward inner-lining protrusions 11 protrude from the outer circumferential surface of the inner lining 10 is not sufficient and cannot be reliably formed. Thereby, the inner lining 10 cannot come into close contact with the inner circumferential surface of the outer sheath 20, thus making it impossible to adhere the inner lining 10 and the outer sheath 20 to each other without a separate bonding process.

### Industrial Applicability

The present invention is not limited to the above-described embodiments or the attached drawings. The scope of the present invention must be defined by the accompanying claims.

Therefore, those skilled in the art will appreciate that various modifications, additions and substitutions are possible, without departing from the scope and spirit of the invention as disclosed in the accompanying claims. All changes that fall within the bounds of the present invention or the equivalence of the bounds should be understood to be embraced by the present invention.

## Claims

1. A pressure-resistant hose, comprising:
a tubular inner lining;
a fabric woven layer comprising: first-direction threads spirally and continuously wound around an outer circumferential surface of the inner lining; and second-direction threads continuously wound around the outer circumferential surface of the inner lining such that the second-direction threads overlap and cross the first-direction threads; and
a tubular outer sheath provided around the outer circumferential surface of the inner lining, the outer sheath covering the fabric woven layer,
wherein each of the first- and second-direction threads comprises a joined thread formed of at least two strands of yarn, and the strands of yarn of the joined thread are brought into parallel contact with each other and are wound around the outer circumferential surface of the inner lining, each of the strands of yarn comprising a filament yarn, and
the first- and second-direction threads are wound around the outer circumferential surface of the inner lining in such a way that ten or less joined threads form a pitch so that the inner lining and the outer sheath are coupled to each other through openings formed in the fabric woven layer by crossing the first- and second-direction threads.

2. The pressure-resistant hose of claim 1, wherein the fabric woven layer is formed by weaving the first- and second-direction threads in an over and under pattern to form a mesh that is interposed between the inner lining and the outer sheath.

3. The pressure-resistant hose of claim 1 or 2, wherein each of the openings of the fabric woven layer has an area of 0.49 mm² or more.

4. The pressure-resistant hose of claim 1 or 2, wherein the outer circumferential surface of the inner lining protrudes outward through the openings of the fabric woven layer and is closely attached to an inner circumferential surface of the outer sheath.

5. The pressure-resistant hose of claim 4, wherein the outer circumferential surface of the inner lining protrudes by 50% or more of a thickness of the fabric woven layer.

6. The pressure-resistant hose of claim 4, wherein an inner circumferential surface of the inner lining has an embossed shape.

7. The pressure-resistant hose of claim 1 or 2, wherein an inner circumferential surface of the outer sheath protrudes inward through the openings of the fabric woven layer and is closely attached to the outer circumferential surface of the inner lining.

8. The pressure-resistant hose of claim 7, wherein the inner circumferential surface of the outer sheath protrudes by 50% or more of a thickness of the fabric woven layer.

9. The pressure-resistant hose of claim 7, wherein an outer circumferential surface of the outer sheath has an embossed shape.
